# EUROPÄISCHE PATENTSCHRIFT

(11) **EP 4 422 942 B1**
(45) Veröffentlichungstag und Bekanntmachung des Hinweises auf die Patenterteilung: **29.10.2025**
(21) Anmeldenummer: 22782488.5
(22) Anmeldetag: 12.09.2022
(51) Int. Cl.: B60W 30/18, B60W 60/00, B60W 50/14

(54) **VERFAHREN ZUM UNTERSTÜTZEN EINES NUTZERS EINES FAHRZEUGS BEI EINEM SPURWECHSELMANÖVER MIT BERÜCKSICHTIGUNG VON UNTERSCHIEDLICHEN BEREICHEN IN EINER UMGEBUNG DES FAHRZEUGS SOWIE FAHRERASSISTENZSYSTEM FÜR EIN FAHRZEUG**
METHOD FOR ASSISTING A VEHICLE USER DURING A LANE CHANGE MANOEUVRE TAKING INTO ACCOUNT DIFFERENT AREAS IN THE SURROUNDINGS OF THE VEHICLE, AND DRIVER ASSISTANCE SYSTEM FOR A VEHICLE
PROCÉDÉ D'AIDE D'UN UTILISATEUR DE VÉHICULE LORS D'UNE MANOEUVRE DE CHANGEMENT DE VOIE TENANT COMPTE DE DIFFÉRENTES ZONES DANS L'ENVIRONNEMENT DU VÉHICULE, ET SYSTÈME D'AIDE À LA CONDUITE POUR UN VÉHICULE

(30) Priorität: 26.10.2021 DE 102021127817
(43) Veröffentlichungstag der Anmeldung: 04.09.2024
(73) Patentinhaber: Bayerische Motoren Werke Aktiengesellschaft, 80809 München (DE)
(72) Erfinder: RIETH, Dominik, 80992 München (DE); FAYAD, Sami, 81369 München (DE); NIERMANN, Stephan, 85241 Hebertshausen (DE)
(86) Internationale Anmeldenummer: PCT/EP2022/075209
(87) Internationale Veröffentlichungsnummer: WO 2023/072473

(56) Entgegenhaltungen:
- DE-A1- 102015 110 969
- DE-B3- 102020 117 160
- US-A1- 2019 382 020

## Beschreibung

Die vorliegende Erfindung betrifft ein Verfahren zum Unterstützen eines Nutzers eines Fahrzeugs bei einem Spurwechselmanöver. Darüber hinaus betrifft die vorliegende Erfindung ein Fahrerassistenzsystem für ein Fahrzeug.

Aus dem Stand der Technik sind Fahrerassistenzsysteme zum Durchführen von zumindest teilautomatisierten Spurwechselmanövern bzw. sogenannte Spurwechselassistenzsysteme bekannt. Bei diesen Fahrerassistenzsystemen mit automatisierter bzw. automatischer Spurwechselfunktion zeigt der Nutzer bzw. Fahrer typischerweise durch eine bestimmte Bedienhandlung einen gewünschten Spurwechsel an. Wenn eine solche Bedienhandlung erkannt wird, wird mittels des Fahrerassistenzsystems das Fahrzeug entlang einer geplanten Trajektorie auf den benachbarten Fahrstreifen bzw. die Zielspur mit automatisierter Querführung und im Allgemeinen auch mit automatisierter Längsführung manövriert. Bei derartigen Fahrerassistenzsystemen bzw. Spurwechselassistenzsystemen wird üblicherweise der fahrerseitige Spurwechselwunsch durch das Betätigen eines entsprechenden Bedienelements, beispielsweise eines Blinkerhebels, zum Aktivieren von außerhalb des Fahrzeugs sichtbaren Fahrtrichtungsanzeigern signalisiert.

Bekannte Fahrerassistenzsysteme bzw. Spurwechselassistenzsysteme überwachen im Allgemeinen vor dem Spurwechselmanöver mittels einer geeigneten Umfeldsensorik das Umfeld des Fahrzeugs. Auf die Bedienhandlung des Nutzers hin kann dann der Fahrstreifen gewechselt werden, falls auf dem benachbarten Fahrstreifen eine freie Lücke für das eigene Fahrzeug erkannt wurde.

Darüber hinaus sind aus dem Stand der Technik Fahrerassistenzsysteme bekannt, welche den Nutzer des Fahrzeugs auf einer mehrspurigen Straße bei einem Erreichen einer Ausfahrt unterstützen. Dabei kann das Fahrerassistenzsystem beispielsweise infolge einer Eingabe von einem Navigationsziel alle nötigen Spurwechsel bis zum Erreichen einer Ausfahrt vorbereiten. Hierzu kann das Fahrerassistenzsystem zunächst eine freie Lücke für das Fahrzeug auf dem benachbarten Fahrstreifen erkennen, und anschließend die Geschwindigkeit des Fahrzeugs für das nachfolgende Spurwechselmanöver in die erkannte Lücke anpassen. Das Spurwechselmanöver selbst kann mittels eines Spurwechselassistenzsystems durchgeführt werden, wobei das Spurwechselassistenzsystem automatisch oder nach einer Bedieneingabe durch den Nutzer ausgelöst wird.

In diesem Zusammenhang beschreibt die DE 10 2020 117 161 A1 ein Fahrzeugsystem zum Betrieb einer Spurwechselassistenzfunktion eines Kraftfahrzeugs. Dabei ist das Fahrzeugsystem dazu eingerichtet, zu bestimmen, dass das Fahrzeug einen fahrrouten-bedingten Spurwechsel durchführen sollte, um entlang einer geplanten Fahrroute zu fahren. Darüber hinaus ist das Fahrzeugsystem dazu eingerichtet, eine Lücke für den fahrrouten-bedingten Spurwechsel derart aus einer Lücken-Menge auszuwählen, dass eine in Bezug auf das Fahrzeug frontseitige Lücke bei der Auswahl eine höhere Priorität aufweist, als eine in Bezug auf das Fahrzeug heckseitige Lücke.

Zudem beschreibt die DE 10 2020 117 160 B3 ein Fahrzeugsystem zum Betrieb einer Spurwechselassistenzfunktion eines Kraftfahrzeugs. Das Fahrzeugsystem ist eingerichtet, einen Wert eines Dringlichkeitsmaßes für einen Fahrrouten-bedingten Spurwechsel zu ermitteln, wobei der Wert des Dringlichkeitsmaßes die Dringlichkeit dafür anzeigt, dass das Fahrzeug einen Spurwechsel durchführt, um entlang einer geplanten Fahrroute zu fahren.

Es ist Aufgabe der vorliegenden Erfindung, eine Lösung aufzuzeigen, wie ein Betrieb eines Fahrerassistenzsystems der eingangs genannten Art hinsichtlich der Suche und/oder Auswahl von Lücken zwischen Verkehrsteilnehmern effizienter durchgeführt werden kann.

Diese Aufgabe wird erfindungsgemäß durch ein Verfahren sowie durch ein Fahrerassistenzsystem mit den Merkmalen gemäß den unabhängigen Ansprüchen gelöst. Vorteilhafte Weiterbildungen der vorliegenden Erfindung sind in den abhängigen Ansprüchen angegeben.

Ein erfindungsgemäßes Verfahren dient zum Unterstützen eines Nutzers eines Fahrzeugs bei einem Spurwechselmanöver. Das Verfahren umfasst das Empfangen eines Navigationsbefehls zum Durchführen des Spurwechselmanövers von einem zweiten Fahrstreifen auf einen ersten Fahrstreifen einer Straße. Ferner umfasst das Verfahren das Suchen von Lücken für das Fahrzeug zwischen weiteren Verkehrsteilnehmern auf dem ersten Fahrstreifen sowie das Auswählen einer der Lücken für das Spurwechselmanöver. Darüber hinaus umfasst das Verfahren das Definieren eines Fernfelds, eines Mittelfelds und eines Nahfelds in einer Umgebung des Fahrzeugs, wobei das Nahfeld an das Fahrzeug angrenzt, das Mittelfeld sich an das Nahfeld anschließt und das Fernfeld sich an das Mittelfeld anschließt. Darüber hinaus liegt das Fernfeld außerhalb eines Erfassungsbereichs von Umfeldsensoren des Fahrzeugs. Das Nahfeld und das Mittelfeld liegen innerhalb des Erfassungsbereichs der Umfeldsensoren. Außerdem umfasst das Verfahren das Durchführen der Suche und/oder der Auswahl der Lücke nach einer vorbestimmten Reihenfolge, bei welcher zunächst ein Bereich des Fernfelds, welcher in Fahrtrichtung des Fahrzeugs vor dem Fahrzeug liegt, danach ein Bereich des Mittelfelds, welcher in Fahrtrichtung des Fahrzeugs vor dem Fahrzeug liegt, und anschließend das Nahfeld überprüft werden.

Mit Hilfe des Verfahrens soll der Nutzer bzw. Fahrer des Fahrzeugs beim Manövrieren des Fahrzeugs auf einer mehrspurigen Straße unterstützt werden. Bei der mehrspurigen Straße kann es sich grundsätzlich um eine Fernstraße, eine Bundesstraße, eine Schnellstraße, eine autobahnähnliche Straße oder dergleichen handeln. Bevorzugt handelt es sich bei der mehrspurigen Straße um eine Autobahn. Die Straße kann beispielsweise zwei Richtungsfahrbahnen mit jeweils zumindest zwei Fahrstreifen, welche vorliegend als erster Fahrstreifen und zweiter Fahrstreifen bezeichnet werden, aufweisen. Auf diesen Fahrstreifen können sich sowohl das eigene Fahrzeug als auch weitere Verkehrsteilnehmer in eine vorgegebene Fahrtrichtung bewegen. Die Straße kann auch weitere Fahrstreifen aufweisen. Dabei kann der erste Fahrstreifen an eine Ausfahrt bzw. einen Verzögerungsstreifen, welcher zu der Ausfahrt führt, angrenzen. Der erste Fahrstreifen kann beispielsweise die rechte Spur einer Autobahn sein.

Mittels des Fahrerassistenzsystems des Fahrzeugs wird der Navigationsbefehl empfangen, welcher beschreibt, dass das Fahrzeug ausgehend von dem zweiten Fahrstreifen ein Spurwechselmanöver auf den ersten Fahrstreifen durchführen soll. Insbesondere beschreibt der Navigationsbefehl, dass das Fahrzeug von dem zweiten Fahrstreifen über den ersten Fahrstreifen auf die Ausfahrt der Straße manövriert werden soll. Mit anderen Worten soll zunächst ein Spurwechsel von dem zweiten Fahrstreifen auf den ersten Fahrstreifen durchgeführt werden und anschließend soll das Fahrzeug die Straße über die Ausfahrt verlassen. Ferner kann das Fahrzeug von der Straße über die Ausfahrt auf eine andere Straße wechseln. Dies kann beispielsweise bei einem Autobahnkreuz oder dergleichen der Fall sein. Grundsätzlich kann der Navigationsbefehl durch eine Routenführung bzw. ein Navigationssystem des Fahrzeugs vorgegeben werden. Alternativ oder zusätzlich kann der Navigationsbefehl durch eine entsprechende Bedieneingabe von dem Nutzer begründet sein.

Des Weiteren kann mittels des Fahrerassistenzsystems der Spurwechsel bzw. das Spurwechselmanöver von dem zweiten Fahrsteifen auf den ersten Fahrstreifen vorbereitet werden. Hierzu kann zunächst mit entsprechenden Umfeldsensoren des Fahrerassistenzsystems bzw. des Fahrzeugs nach freien Lücken für das Fahrzeug auf dem ersten Fahrstreifen gesucht werden. Somit können freie Lücken zwischen den weiteren Verkehrsteilnehmern auf dem ersten Fahrstreifen gefunden werden, welche für das nachfolgende Spurwechselmanöver geeignet sind.

Es kann ferner vorgesehen sein, dass mittels des Fahrerassistenzsystems eine Geschwindigkeit des Fahrzeugs bzw. die Längsgeschwindigkeit zur Vorbereitung des Spurwechselmanövers angepasst wird. Insbesondere kann die Geschwindigkeit des eigenen Fahrzeugs verringert werden bzw. an der Geschwindigkeit der weiteren Verkehrsteilnehmer auf dem ersten Fahrstreifen angepasst werden. Beispielsweise kann die Geschwindigkeit des Fahrzeugs derart angepasst werden, dass eine Lücke in der Zielspur verfolgt wird.

Wenn beispielsweise eine freie Lücke gefunden wurde, kann ein entsprechender Hinweis an den Nutzer zum Betätigen eines Bedienelements bzw. des Blinkerhebels ausgegeben werden. Infolge der Betätigung des Bedienelements kann dann das Spurwechselmanöver von dem zweiten Fahrstreifen auf den ersten Fahrstreifen ausgelöst werden bzw. initiiert werden. Das Spurwechselmanöver kann mittels des Fahrerassistenzsystems bzw. eines Spurwechselassistenzsystems automatisch bzw. automatisiert durchgeführt werden.

Gemäß der vorliegenden Erfindung werden in der Umgebung des Fahrzeugs das Fernfeld, das Mittelfeld und das Nahfeld definiert. Dabei grenzt das Nahfeld an das Fahrzeug bzw. eine Außenhülle des Fahrzeugs an. Das Nahfeld beschreibt also die unmittelbare Umgebung des Fahrzeugs. Das Mittelfeld umgibt das Nahfeld bzw. schließt sich an das Nahfeld an. Dabei liegen sowohl das Nahfeld als auch das Mittelfeld innerhalb des Erfassungsbereichs der Umfeldsensoren bzw. innerhalb der Erfassungsbereiche der Umfeldsensoren des Fahrzeugs. Dabei beschreibt der Erfassungsbereich denjenigen Bereich, welcher mit den Umfeldsensoren des Fahrzeugs erfasst werden kann bzw. den Bereich, in dem mit den Umfeldsensoren Objekte detektiert werden können. Die Umfeldsensoren des Fahrzeugs bzw. des Fahrerassistenzsystems können als Radarsensoren, Lidar-Sensoren, Kameras, Ultraschallsensoren oder dergleichen ausgebildet sein. Das Fernfeld umgibt das Mittelfeld bzw. schließt sich an das Mittelfeld an. Das Fernfeld, das Mittelfeld und/oder das Nahfeld können ausgehend von einem Bezugspunkt des Fahrzeugs definiert werden. Das Fernfeld, das Mittelfeld und/oder das Nahfeld können sich also mit dem Fahrzeug mitbewegen. Das Fernfeld, das Mittelfeld und/oder das Nahfeld können das Fahrzeug bzw. den Bezugspunkt des Fahrzeugs konzentrisch umgeben. Beispielsweise kann dem Fernfeld, dem Mittelfeld und/oder dem Nahfeld jeweils ein Radius zugeordnet sein.

Die Suche nach der Lücke zwischen den Verkehrsteilnehmern und/oder die Auswahl der Lücke für das Spurwechselmanöver auf dem ersten Fahrstreifen wird gemäß der vorbestimmten Reihenfolge durchgeführt. Dabei sieht die vorbestimmte Reihenfolge vor, dass zunächst der Bereich des Fernfelds, welcher in Fahrtrichtung des Fahrzeugs vor dem Fahrzeug liegt, überprüft wird. Im Anschluss daran wird der Bereich des Mittelfelds überprüft, welcher in Fahrtrichtung des Fahrzeugs vor dem Fahrzeug liegt. Danach wird das Nahfeld auf die freien Lücken hin überprüft. Mit anderen Worten ist es gemäß der vorliegenden Erfindung vorgesehen, dass für die Lückensuche und bevorzugt auch für die Auswahl bzw. Synchronisation drei Horizonte verwendet werden. Diese drei Horizonte werden durch die Bereiche des Fernfelds und des Mittelfelds, welche vor dem Fahrzeug liegen, sowie durch das Nahfeld gebildet. Ferner werden in jedem Bereich bzw. Horizont die Stärken des Fahrerassistenzsystems ausgenutzt. So können Optimierungsverfahren, Erfahrungswerte, Vorausschau und Heuristiken miteinander zu einem Ganzen verknüpft werden. Auf diese Weise kann Rechenleistung und Rechenzeit eingespart werden. Insgesamt kann somit das Fahrerassistenzsystem zum Unterstützen eines Nutzers bei einem Spurwechsel hinsichtlich der Suche der freien Lücken für ein Spurwechselmanöver effizienter gestaltet werden.

Bevorzugt wird bei der Überprüfung des Fernfelds bzw. des Bereichs des Fernfelds in Fahrtrichtung vor dem Fahrzeug für den ersten Fahrstreifen eine Verkehrsdichte und/oder eine mittlere Größe der Lücken zwischen den Verkehrsteilnehmern prädiziert. In dem Fernfeld können mit den Umfeldsensoren des Fahrzeugs bzw. des Fahrerassistenzsystems keine weiteren Verkehrsteilnehmer erkannt werden. In diesem Fall können Erfahrungswerte genutzt werden bzw. die Verkehrsdichte prädiziert werden. Hierzu können Verkehrsinformationen, beispielsweise eine sogenannte Real Time Traffic Information (RTTI) oder dergleichen, genutzt werden. Ferner können auf Grundlage der Messungen mit den Umfeldsensoren in dem Mittelfeld und Nahfeld Verkehrsdichten auf den relevanten Fahrstreifen bzw. dem ersten Fahrstreifen in dem Fernfeld bestimmt werden. Auf Grundlage dieser Messungen können dann Extrapolationen bzw. Abschätzungen für die Verkehrsdichte in dem Fernfeld durchgeführt werden. In diesem Fall können auch entsprechende Erfahrungswerte berücksichtigt werden.

Aus der spurbezogenen Verkehrsdichte bzw. Fahrzeugdichte kann dann die mittlere Größe der Lücken zwischen den Verkehrsteilnehmern in dem Fernfeld abgeleitet werden. Ferner kann die mittlere Lückengröße im Fernfeld an einem bestimmten Ort als Funktion der Eigengeschwindigkeit, der mittleren Geschwindigkeit aller erkannten Verkehrsteilnehmer, der aktuellen Verkehrsinformationen und/oder einem ortsbezogenen Erfahrungskoeffizienten bestimmt werden. Dieser Erfahrungskoeffizient kann beispielsweise beschreiben, dass die Lücken auf dem Fahrstreifen im Bereich einer Ausfahrt tendenziell eher kleiner werden, je näher man der Ausfahrt kommt. Somit kann beispielsweise bereits ab der Fahrsituation, bei welcher sich die Ausfahrt in dem Fernfeld befindet, schon eine Abschätzung zur Verkehrsdichte bzw. zum Vorhandensein von Lücken für das Spurwechselmanöver getroffen werden.

In einer weiteren Ausführungsform werden bei der Überprüfung des Mittelfelds bzw. des Bereichs des Mittelfelds in Fahrtrichtung vor dem Fahrzeug die Lücken zwischen den Verkehrsteilnehmern anhand von Sensordaten, welche mit den Umfeldsensoren bereitgestellt werden, erkannt. Wie bereits erläutert, können mit den Umfeldsensoren des Fahrzeugs in dem Nahfeld und dem Mittelfeld weitere Verkehrsteilnehmer bzw. Fahrzeuge erfasst werden. Im Vergleich zu dem Fernfeld wird in dem Mittelfeld insbesondere nicht mit mittleren Geschwindigkeiten und Lückengrößen gerechnet, sondern es werden tatsächliche Messgrößen berücksichtigt. Dies bedeutet beispielsweise, dass auf Grundlage der Sensordaten der Umfeldsensoren tatsächlich vorhandene Lücken zwischen den Verkehrsteilnehmern erkannt werden. In dem Mittelfeld kann also für die Auswahl der Lücken bzw. Synchronisation die Sensorik und Heuristik verwendet werden.

In einer weiteren Ausführungsform wird für die Überprüfung des Nahfelds eine Mehrzahl von Trajektorien für mögliche Spurwechselmanöver in die Lücken zwischen den Verkehrsteilnehmern auf dem ersten Fahrstreifen bestimmt. In dem Nahfeld, welches sich im unmittelbaren Umfeld des Fahrzeugs befindet, kann also eine Mehrzahl von Trajektorien in die erkannten freien Lücken auf dem ersten Fahrstreifen berechnet werden. Insbesondere kann sich das Nahfeld ausgehend von dem Fahrzeug bzw. dem Ego-Fahrzeug bis hin zu einem Optimierungsradius erstrecken. Dieser Optimierungsradius kann auf Grundlage der Eigengeschwindigkeit des Fahrzeugs und einer Optimierungszeit bestimmt werden. Diese Optimierungszeit ist insbesondere technisch durch die Länge der zu vergleichenden Trajektorien bestimmt. Die Optimierungszeit bzw. die Länge der zu vergleichenden Trajektorien kann wiederum abhängig von der Rechenkapazität einer Recheneinrichtung des Fahrerassistenzsystems sein, mittels welcher die Trajektorien berechnet werden. Beispielsweise kann die Recheneinrichtung dazu eingerichtet sein, acht Trajektorien gleichzeitig zu berechnen, die jeweils eine Zeitdauer von 10 Sekunden bei der aktuellen Geschwindigkeit des Fahrzeugs aufweisen. In diesem Fall beträgt die Optimierungszeit 10 Sekunden und acht Fahrmanöver bzw. Trajektorien können in dem Nahfeld miteinander verglichen werden. Somit können die jeweiligen Trajektorien bzw. die Lücken für das Spurwechselmanöver präzise untersucht werden.

In einer weiteren Ausführungsform wird die Mehrzahl von Trajektorien für die möglichen Spurwechselmanöver und eine Trajektorie, welche eine Weiterfahrt des Fahrzeugs auf dem zweiten Fahrstreifen beschreibt, auf Grundlage einer Kostenfunktion bewertet. Es können also eine Mehrzahl von Fahrmanövern im Vorfeld berechnet und anschließend eines der Manöver ausgewählt werden. Diese Fahrmanöver umfassen zum einen die möglichen Spurwechselmanöver von dem zweiten Fahrstreifen auf den ersten Fahrstreifen entlang der zuvor berechneten Trajektorien. Ein weiteres Fahrmanöver ist die Variante, dass das Fahrzeug auf dem zweiten Fahrstreifen bleibt, also kein Spurwechsel auf den ersten Fahrstreifen durchgeführt wird. Gemäß einer Kostenfunktion können die jeweiligen Trajektorien bzw. Fahrmanöver dann für die Auswahl der Lücke bewertet werden.

Bei der Bewertung der Trajektorien bzw. bei der Kostenfunktion können auch entsprechende Prioritäten berücksichtigt werden. Beispielsweise können Lücken in Fahrtrichtung vor dem Fahrzeug eine höhere Priorität aufweisen als Lücken, welche sich neben dem Fahrzeug befinden. Zudem können Lücken, welche sich in Fahrtrichtung hinter dem Fahrzeug befinden, eine geringere Priorität aufweisen als die Lücken, die sich neben dem Fahrzeug befinden. Des Weiteren können die Lücken zwischen den Verkehrsteilnehmern auf dem ersten Fahrstreifen in Abhängigkeit von ihrer Größe bzw. Länge bezogen auf die Fahrtrichtung priorisiert werden. So können beispielsweise große Lücken höher priorisiert werden als kleine Lücken. Zudem können die Kosten für die Trajektorie, bei welcher das Fahrzeug auf dem zweiten Fahrstreifen bleibt, in Abhängigkeit von der Entfernung zu der Ausfahrt verändert werden. Insbesondere können die Kosten mit abnehmendem Abstand zu der Ausfahrt erhöht werden. Des Weiteren können bei der Kostenfunktion die Trajektorien in Abhängigkeit von ihrer Formgebung priorisiert werden. Beispielsweise kann diejenige Trajektorie priorisiert werden, welche eine minimale Ableitung der Beschleunigung aufweist. Mit anderen Worten können diejenigen Trajektorien, welche ein komfortables Fahrgefühl bei dem Spurwechselmanöver vermitteln, priorisiert werden.

In einer weiteren Ausführungsform wird gemäß der vorbestimmten Reihenfolge für die Suche und/oder Auswahl der Lücken nach der Überprüfung des Nahfelds ein Bereich des Mittelfelds, welcher in Fahrtrichtung des Fahrzeugs hinter dem Fahrzeug liegt, und/oder ein Bereich des Fernfelds, welcher in Fahrtrichtung des Fahrzeugs hinter dem Fahrzeug liegt untersucht. Nach der Überprüfung des Nahfelds können also auch diejenigen Bereiche untersucht werden, welche sich in Fahrtrichtung hinter dem Fahrzeug befinden. Dabei kann gemäß der vorbestimmten Reihenfolge zunächst das Mittelfeld und im Anschluss daran das Fernfeld untersucht werden. Somit kann auch ein Spurwechselmanöver in eine Lücke geplant werden, welche sich in Fahrtrichtung des Fahrzeugs hinter dem Fahrzeug befindet. Dies kann bedeuten, dass die Geschwindigkeit des eigenen Fahrzeugs zu reduzieren ist. Somit kann sich das Fahrzeug quasi zurückfallen lassen, um das Spurwechselmanöver durchzuführen. Grundsätzlich ist es aber bevorzugt vorgesehen, dass für das Spurwechselmanöver Lücken ausgewählt werden, welche sich in Fahrtrichtung vor dem Fahrzeug befinden.

In einer weiteren Ausgestaltung werden bei der Suche und/oder Auswahl der Lücken in den Bereichen jeweils Wahrscheinlichkeiten für ein erfolgreiches Spurwechselmanöver bestimmt und falls die jeweilige Wahrscheinlichkeit einen Grenzwert überschreitet, wird in den nächsten Bereich gemäß der vorbestimmten Reihenfolge gewechselt. Beispielsweise kann zunächst mit dem Bereich des Fernfelds gestartet werden, der sich in Fahrtrichtung vor dem Fahrzeug befindet. In diesem Fall kann beispielsweise die Wahrscheinlichkeit bestimmt werden, dass die prädizierte mittlere Lückengröße größer ist als eine minimale Lückengröße, die für einen Spurwechsel des Fahrzeugs nötig ist. Diese Wahrscheinlichkeit kann dann mit entsprechenden Erfahrungskoeffizienten skaliert werden, die beispielsweise Unsicherheiten für weit in der Zukunft liegende Ereignisse modelliert. Das Integral dieser Wahrscheinlichkeiten im Fernfeld kann dann bis hin zu einer Abbruchdistanz für einen erfolgreichen Spurwechsel bestimmt werden. Falls in dem Fernfeld die Wahrscheinlichkeit für das erfolgreiche Spurwechselmanöver den Grenzwert überschreitet, kann die Suche und/oder Auswahl der Lücken weiterhin in dem Fernfeld durchgeführt werden. Falls die Wahrscheinlichkeit aber den Grenzwert unterschreitet, kann für die Suche und/oder Auswahl der Lücken zusätzlich das Mittelfeld betrachtet werden. In dem Mittelfeld kann analog zum Fernfeld eine Wahrscheinlichkeit für einen erfolgreichen Spurwechsel bestimmt werden. Falls diese Wahrscheinlichkeit einen Grenzwert bzw. Schwellenwert unterschreitet kann das Nahfeld berücksichtigt werden.

In einer weiteren Ausführungsform wird das Spurwechselmanöver derart geplant, dass das Fahrzeug von dem ersten Fahrstreifen auf eine Ausfahrt der Straße manövriert wird. Wie eingangs erläutert, ist es insbesondere vorgesehen, dass auf Grundlage des Navigationsbefehls der Nutzer bis zum Erreichen der Ausfahrt bei den jeweiligen Spurwechselmanövern zwischen den Fahrstreifen unterstützt wird. Grundsätzlich kann das Verfahren auch für Straßen mit drei oder mehr Fahrstreifen genutzt werden.

Des Weiteren ist insbesondere vorgesehen, dass bis zu einem Erreichen der Ausfahrt für eine Geschwindigkeit des Fahrzeugs ein überschreitbarer Geschwindigkeitsverlauf und/oder eine nicht überschreitbare Grenzgeschwindigkeit vorgegeben werden. Um die jeweiligen Spurwechselmanöver zwischen den Fahrstreifen vorzubereiten, kann die Geschwindigkeit des Fahrzeugs bzw. die Längsgeschwindigkeit angepasst werden und insbesondere reduziert werden. Für die Geschwindigkeit des Fahrzeugs kann einerseits ein überschreitbarer Geschwindigkeitsverlauf als Soft Boundary vorgegeben werden. Dieser Geschwindigkeitsverlauf kann eine Soll-Geschwindigkeit des Fahrzeugs ausgehend von der aktuellen Geschwindigkeit des Fahrzeugs bis hin zu einer Zielgeschwindigkeit beim Erreichen der Ausfahrt vorgeben. Auf Grundlage von diesem Geschwindigkeitsverlauf bzw. der Sollgeschwindigkeit können die Kosten für die Trajektorien, insbesondere die Trajektorie, bei welcher das Fahrzeug keinen Spurwechsel durchführt, bestimmt werden. Der Geschwindigkeitsverlauf bzw. die vorgegebene Sollgeschwindigkeit kann aber gegebenenfalls überschritten werden. Alternativ oder zusätzlich können für die Geschwindigkeit des Fahrzeugs auch nicht überschreitbare Grenzgeschwindigkeiten vorgegeben werden. Derartige Grenzgeschwindigkeiten können beispielsweise durch die aktuell zulässige Höchstgeschwindigkeit und/oder eine von dem Fahrer vorgegebene Setzgeschwindigkeit gegeben sein.

Ein erfindungsgemäßes Fahrerassistenzsystem für ein Fahrzeug ist zum Durchführen eines erfindungsgemäßen Verfahrens und der vorteilhaften Ausgestaltungen davon eingerichtet. Das Fahrerassistenzsystem kann insbesondere eine Recheneinrichtung aufweisen, welche durch zumindest ein elektronisches Steuergerät gebildet sein kann. Grundsätzlich kann die Recheneinrichtung zumindest einen Prozessor und/oder einen Speicher aufweisen.

Das Fahrerassistenzsystem bzw. die Recheneinrichtung ist dazu eingerichtet, den Navigationsbefehl zum Durchführen des Spurwechselmanövers von dem zweiten Fahrstreifen auf einen ersten Fahrstreifen einer Straße zu empfangen. Darüber hinaus ist das Fahrerassistenzsystem dazu eingerichtet, Lücken für das Fahrzeug zwischen weiteren Verkehrsteilnehmern auf dem ersten Fahrstreifen zu suchen und eine dieser Lücken für das Spurwechselmanöver auszuwählen. Darüber hinaus ist das Fahrerassistenzsystem dazu eingerichtet, ein Fernfeld, ein Mittelfeld und ein Nahfeld in einer Umgebung des Fahrzeugs zu definieren, wobei das Nahfeld an das Fahrzeug angrenzt, das Mittelfeld sich an das Nahfeld anschließt und das Fernfeld sich an das Mittelfeld anschließt. Dabei liegt das Fernfeld außerhalb eines Erfassungsbereichs der Umfeldsensoren des Fahrzeugs und das Nahfeld und das Mittelfeld liegen innerhalb des Erfassungsbereichs der Umfeldsensoren. Darüber hinaus ist das Fahrerassistenzsystem dazu eingerichtet, die Suche und/oder Auswahl der Lücken nach einer vorbestimmten Reihenfolge durchzuführen. Bei dieser Reihenfolge wird zunächst ein Bereich des Fernfelds, welcher sich in Fahrtrichtung des Fahrzeugs vor dem Fahrzeug befindet, danach ein Bereich des Mittelfelds, welcher in Fahrtrichtung des Fahrzeugs vor dem Fahrzeug liegt, und anschließend das Nahfeld überprüft.

Ein erfindungsgemäßes Fahrzeug umfasst ein erfindungsgemäßes Fahrerassistenzsystem. Das Fahrzeug ist insbesondere als Personenkraftwagen ausgebildet.

Die mit Bezug auf das erfindungsgemäße Verfahren vorgestellten und bevorzugten Ausführungsformen und deren Vorteile gelten entsprechend für das erfindungsgemäße Fahrerassistenzsystem sowie das erfindungsgemäße Fahrzeug.

Die Erfindung wird nun anhand von bevorzugten Ausführungsbeispielen sowie unter Bezugnahme auf die beigefügten Zeichnungen näher erläutert. Dabei zeigen:
- Fig. 1: eine schematische Darstellung eines Fahrzeugs, welches ein Fahrerassistenzsystem zum Unterstützen eines Nutzers bei einem Spurwechselmanöver aufweist;
- Fig. 2: ein schematisches Ablaufdiagramm, welches eine Suche und eine Synchronisation von Lücken zwischen Verkehrsteilnehmern für das Spurwechselmanöver verdeutlicht;
- Fig. 3: das Fahrzeug gemäß Fig. 1, welches sich auf einer mehrspurigen Straße befindet, wobei ein Fahrmanöver ausgehend von einem zweiten Fahrstreifen über einen ersten Fahrstreifen zu einer Ausfahrt der Straße geplant ist;
- Fig. 4: schematische Darstellungen eines Soll-Geschwindigkeitsverlaufs sowie von Geschwindigkeitsgrenzen; und
- Fig. 5: ein schematisches Ablaufdiagramm, welches eine Suche und/oder Ausfall von Lücken in einem Fernfeld, einem Mittelfeld und einem Nahfeld in einer Umgebung des Fahrzeugs beschreibt.

In den Figuren werden gleiche oder funktionsgleiche Elemente mit den gleichen Bezugszeichen versehen.

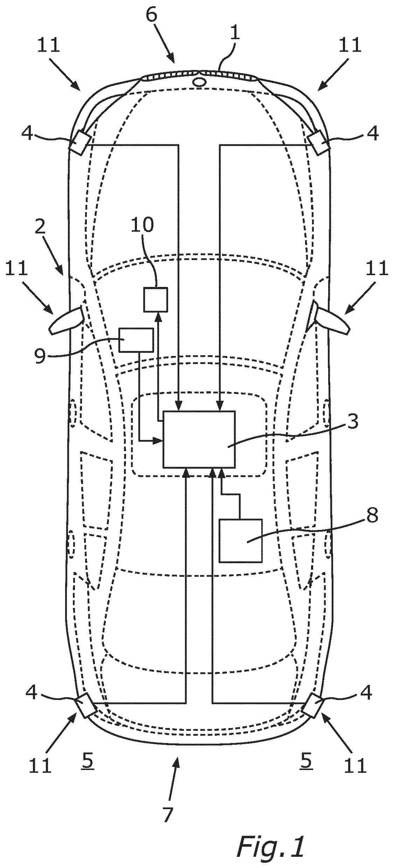

Fig. 1 zeigt ein Fahrzeug 1, welches vorliegend als Personenkraftwagen ausgebildet ist, in einer Draufsicht. Das Fahrzeug 1 umfasst ein Fahrerassistenzsystem 2, mittels welchem ein Nutzer beim Durchführen von Spurwechselmanövern unterstützt werden kann. Das Fahrerassistenzsystem 2 umfasst eine Recheneinrichtung 3, welche beispielsweise durch zumindest ein elektronisches Steuergerät gebildet sein kann.

Darüber hinaus umfasst das Fahrerassistenzsystem 2 Umfeldsensoren 4. In dem vorliegenden Ausführungsbeispiel umfasst das Fahrerassistenzsystem 2 vier Umfeldsensoren 4, von denen zwei Umfeldsensoren 4 in einem Frontbereich 6 und zwei Umfeldsensoren 4 in einem Heckbereich 7 des Fahrzeugs 1 angeordnet sind. Die Umfeldsensoren 4 sind vorliegend in den jeweiligen Ecken des Fahrzeugs 1 angeordnet. Die Umfeldsensoren 4 können bevorzugt als Radarsensoren ausgebildet sein. Mit den Umfeldsensoren 4 können entsprechende Messungen durchgeführt werden, um Objekte und insbesondere weitere Verkehrsteilnehmer 13 in einer Umgebung 5 des Fahrzeugs 1 erfassen zu können.

Die Recheneinrichtung 3 ist ferner dazu eingerichtet, einen Navigationsbefehl von einem Navigationssystem 8 zu empfangen. Außerdem ist die Recheneinrichtung 3 dazu eingerichtet, eine an einem Bedienelement 9 durchgeführte Bedienhandlung von dem Nutzer zu erfassen. Bei dem Bedienelement 9 kann es sich insbesondere um einen Blinkerhebel handeln. Sobald der Blinkerhebel bzw. das Bedienelement 9 von dem Nutzer betätigt wird, können entsprechende Fahrtrichtungsanzeiger 11 des Fahrzeugs 1 aktiviert werden. Darüber hinaus umfasst das Fahrerassistenzsystem 2 eine Ausgabeeinrichtung 10, mittels welcher ein Hinweis an den Nutzer ausgegeben werden kann. Dieser Hinweis kann grundsätzlich optisch, akustisch und/oder haptisch ausgegeben werden.

Die Recheneinrichtung 3 bzw. das Fahrerassistenzsystem 2 ist ferner dazu eingerichtet, einen Antriebsmotor und/oder ein Bremssystem des Fahrzeugs 1 anzusteuern. Somit kann die Geschwindigkeit bzw. die Längsgeschwindigkeit des Fahrzeugs 1 beeinflusst werden. Es kann ferner vorgesehen sein, dass das Fahrerassistenzsystem 2 bzw. die Recheneinrichtung 3 Steuersignale ausgeben kann, um in ein Lenksystem des Fahrzeugs 1 einzugreifen.

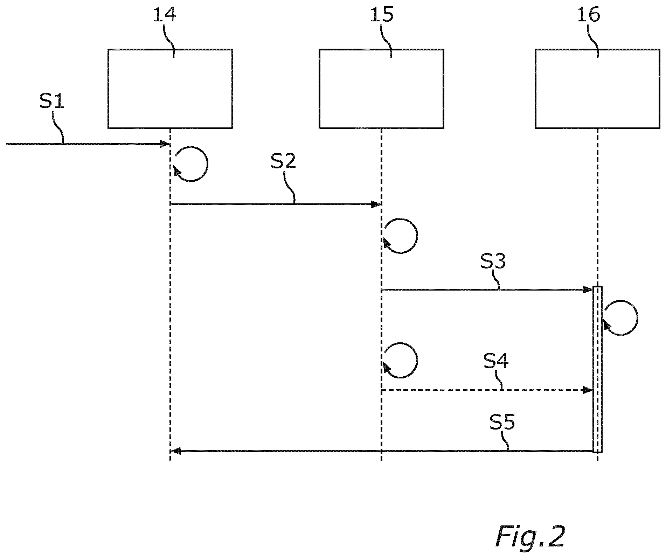

In der Umgebung 5 des Fahrzeugs 1 sollen Lücken 12 zwischen Verkehrsteilnehmern 13 gesucht werden. Diese Lückensuche ist Teil von einer Lückensynchronisation, welche im Zusammenhang mit Fig. 2 erläutert wird. Fig. 2 zeigt ein schematisches Ablaufdiagramm, welches die Lückensuche und/oder die Lückensynchronisation beschreibt. In einem Schritt S1 wird das Verfahren gestartet und die Bedingungen für den Träger eines Funktionsmasters 14 werden geprüft. Dies ist beispielsweise der Fall, wenn der Navigationsbefehl empfangen wird, welcher beschreibt, dass das Fahrzeug 1 über jeweilige Fahrstreifen 17, 18, 19 einer Straße 22 zu einer Ausfahrt 21 der Straße 22 manövriert werden soll. In einem Schritt S2 wird dann ein Trigger zur Nebenspursynchronisation ausgesendet. In einem Block 15, welcher der Lückensuche zugeordnet ist, wird dann aus einer Vielzahl von erkannten Lücken 12 zwischen den Verkehrsteilnehmern 13 die beste Lücke 12 ausgesucht und in einem Schritt S3 als das beste Ziel für das Spurwechselmanöver des Fahrzeugs 1 ausgesendet. In einem Block 16, welcher der longitudinalen Synchronisation zugeordnet ist, wird dann die Kostenfunktion für das Spurwechselmanöver bewertet. Falls während der Lückensuche erkannt wurde, dass eine bessere Lücke 12 vorhanden ist, wird diese in einem Schritt S4 als Ziel ausgesendet. Sobald die Synchronisation abgeschlossen ist, wird ein entsprechendes Signal in einem Schritt S5 ausgesendet.

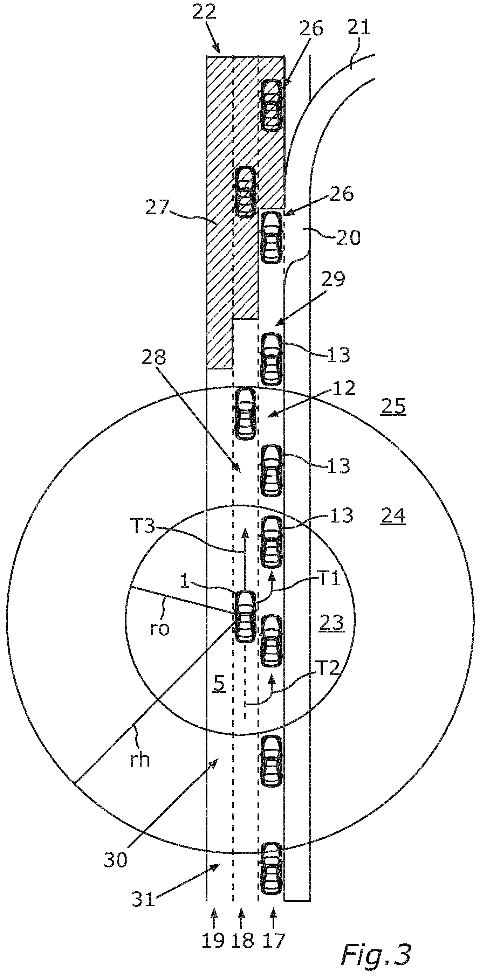

Fig. 3 zeigt das Fahrzeug 1 in einer Verkehrssituation. Hierbei befindet sich das Fahrzeug 1 auf der Straße 22, welche mehrere Fahrspuren 17, 18, 19 aufweist. In dem vorliegenden Beispiel umfasst die Straße 22 einen ersten Fahrstreifen 17, einen zweiten Fahrstreifen 18 sowie einen dritten Fahrstreifen 19. In dem gezeigten Beispiel befindet sich das Fahrzeug 1 auf dem zweiten Fahrstreifen 18 bzw. auf der mittleren Spur. Auf Grundlage des Navigationsbefehls soll das Fahrzeug 1 ausgehend von dem zweiten Fahrstreifen 18 auf den ersten Fahrstreifen 17 und im Anschluss daran auf einen Verzögerungsstreifen 20 zu einer Ausfahrt 21 der Straße 22 manövriert werden. Mit dem Fahrzeug 1 sollen also ein Spurwechselmanöver von dem zweiten Fahrstreifen 18 auf den ersten Fahrzeugstreifen 17 und ein weiteres Spurwechselmanöver von dem ersten Fahrstreifen 17 auf den Verzögerungsstreifen 20 durchgeführt werden. Für die jeweiligen Spurwechselmanöver werden entsprechende Lücken 12 gesucht und ausgewählt.

Für die Suche nach den Lücken 12 bzw. die Lückensynchronisation werden in der Umgebung 5 des Fahrzeugs 1 ein Nahfeld 23, ein Mittelfeld 24 sowie ein Fernfeld 25 definiert. Dabei liegt das Fernfeld 25 außerhalb eines Erfassungsbereichs der Umfeldsensoren 4 des Fahrerassistenzsystems 2. Dies bedeutet, dass die Verkehrsteilnehmer 13, welche sich in dem Fernfeld 25 befinden, mit den Umfeldsensoren 4 nicht erfasst werden können. Bei den Verkehrsteilnehmern 13 in dem Fernfeld 25 handelt es sich um prädizierte Verkehrsteilnehmer 26. Diese prädizierten Verkehrsteilnehmer 26 können auf Grundlage von Messungen mit den Umfeldsensoren 4 in dem Nahfeld 23 sowie dem Mittelfeld 24 abgeschätzt werden. Zudem können Daten von Verkehrsdiensten und/oder Erfahrungswerte genutzt werden.

Das Mittelfeld 24 und das Nahfeld 23 liegen innerhalb des Erfassungsbereichs der Umfeldsensoren 4. In dem vorliegenden Beispiel ist das Mittelfeld 24 durch einen Radius rh definiert. In dem Mittelfeld können die Lücken 12 zwischen den Verkehrsteilnehmern 13 auf dem ersten Fahrstreifen 17 auf Grundlage der Messungen mit den Umfeldsensoren 4 erkannt werden. Das Nahfeld 23 schließt sich unmittelbar an das Fahrzeug 1 bzw. die Außenhülle des Fahrzeugs 1 an. In dem Beispiel ist das Nahfeld 23 durch einen Radius ro definiert. Innerhalb des Nahfelds 23 können unterschiedliche Trajektorien T1, T2 für mögliche Spurwechselmanöver von dem zweiten Fahrstreifen 18 auf den ersten Fahrstreifen 17 berechnet werden. Darüber hinaus wird eine Trajektorie T3 bestimmt, welche beschreibt, dass das Fahrzeug 1 auf dem zweiten Fahrstreifen 18 bleibt, also mit dem Fahrzeug 1 kein Spurwechsel durchgeführt wird. Des Weiteren ist für die jeweiligen Fahrstreifen 17, 18, 19 eine spurbezogene Abbruchdistanz 27 definiert. Falls das Fahrzeug 1 diesen Bereich erreicht, kann das Manövrieren des Fahrzeugs 1 auf die Ausfahrt 21 abgebrochen werden.

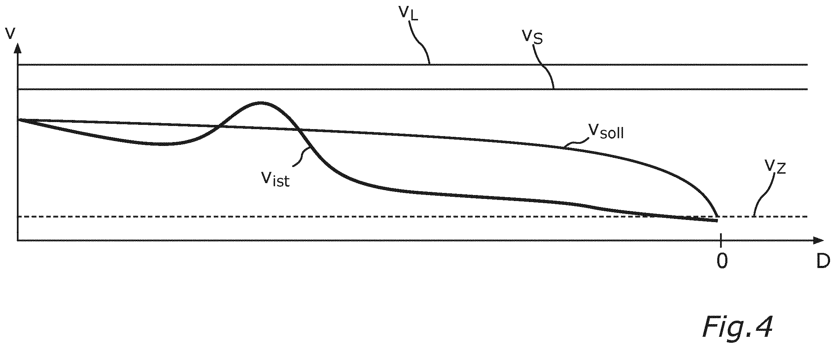

Fig. 4 zeigt einen möglichen Geschwindigkeitsverlauf für das Fahrzeug 1 bis zum Erreichen der Ausfahrt 21. Bei dem Diagramm gemäß Fig. 4 ist auf der Abszisse eine Distanz D bis zum Erreichen der Ausfahrt 21 (D = 0) dargestellt. Auf der Ordinate ist die Geschwindigkeit v aufgetragen. Dabei beschreibt v_{Z} eine Zielgeschwindigkeit, welche beim Erreichen der Ausfahrt 21 von dem Fahrzeug 1 erreicht werden soll. Die Kurve Vₛₒₗₗ beschreibt eine Soll-Geschwindigkeit, welche im Vorfeld vorgegeben werden kann. Diese kann den Geschwindigkeitsverlauf des Fahrzeugs 1 von der aktuellen Position bis zum Erreichen der Ausfahrt 21 beschreiben. Dieser Geschwindigkeitsverlauf kann allerdings von dem Fahrzeug 1 überschritten werden. Dies ist beispielhaft anhand der Ist-Geschwindigkeit vᵢₛₜ des Fahrzeugs 1 gezeigt. Zudem sind harte Grenzen bzw. nicht überschreitbare Geschwindigkeitsgrenzwerte durch eine Setzgeschwindigkeit v_{S}, welche von dem Nutzer für eine Geschwindigkeitsregelung vorgegeben werden wird, sowie eine maximal zulässige Höchstgeschwindigkeit v_{L} gegeben.

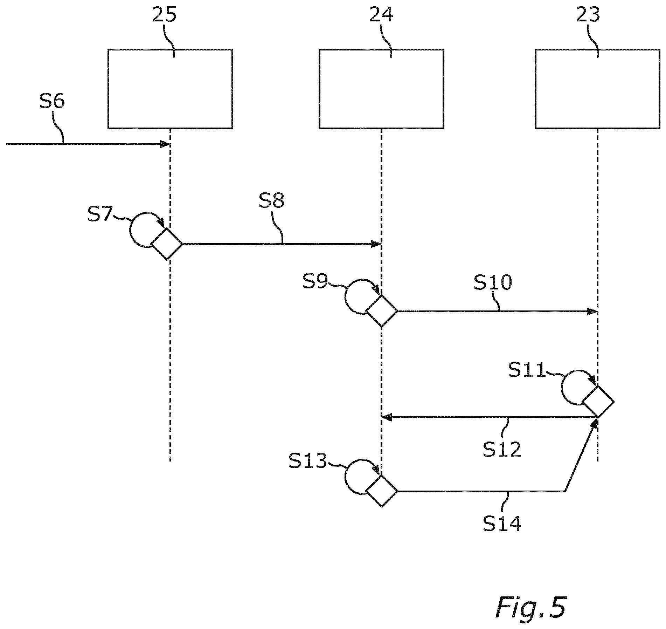

Fig. 5 zeigt in einer schematischen Darstellung ein Verfahren für die Lückensuche in dem Fernfeld 25, dem Mittelfeld 24 sowie dem Nahfeld 23. In einem Schritt S6 wird das Verfahren gestartet. In einem Bereich 29 des Fernfeld 25, welcher in Fahrtrichtung vor dem Fahrzeug 1 liegt, werden weitere Verkehrsteilnehmer 26 auf den relevanten Fahrstreifen 17, 18 prädiziert. Hierzu können die in dem Mittelfeld 24 auf Grundlage der Sensordaten der Umfeldsensoren 4 erkannten Verkehrsteilnehmer 13 extrapoliert werden. Zudem können Verkehrsinformationen sowie Erfahrungswerte genutzt werden. Die Abschätzung in dem Fernfeld 25 bzw. dem Bereich 29 des Fernfelds 25 kann in einem Schritt S7 fortlaufend wiederholt werden. Dies kann beispielsweise vorgesehen sein, wenn das Fahrzeug 1 noch mehrere Kilometer von der Ausfahrt 21 entfernt ist und/oder falls mit keinem hohen Verkehrsaufkommen im Bereich der Ausfahrt zu rechnen ist.

Des Weiteren wird eine Wahrscheinlichkeit für einen erfolgreichen Spurwechsel berechnet. Falls die Wahrscheinlichkeit einen Grenzwert unterschreitet, wird in einem Schritt S8 für die Suche und/oder Auswahl der Lücken 13 zusätzlich ein Bereich 28 des Mittelfelds 24 herangezogen werden, welcher in Fahrtrichtung vor dem Fahrzeug 1 liegt. In einem Schritt S9 werden die Verkehrsteilnehmer 13 sowie die Lücken 12 zwischen den Verkehrsteilnehmern 13 auf Grundlage der Sensordaten der Umfeldsensoren 5 fortlaufend bestimmt. Auch hier wird eine Wahrscheinlichkeit für einen erfolgreichen Spurwechsel ermittelt. Falls diese Wahrscheinlichkeit einen Grenzwert unterschreitet, wird in einem Schritt S10 die Suche auf das Nahfeld 23 erweitert.

Bei der Überprüfung des Nahfelds 23 werden dann in einem Schritt S11 fortlaufend die jeweiligen Trajektorien T1, T2 für die möglichen Spurwechselmanöver in die freien Lücken 13 bestimmt. Zudem wird die Trajektorie T3 für den Fall bestimmt, dass das Fahrzeug 1 auf dem zweiten Fahrstreifen 18 bleibt. Für die jeweiligen Trajektorien T1 bis T3 werden dann auf Grundlage einer Kostenfunktion die Kosten der Trajektorien untereinander bewertet. Falls die jeweiligen Kosten der Trajektorien T1, T2 für die möglichen Spurwechselmanöver unter einem Schwellwert liegen, kann eine Synchronisation auf die optimale Lücke 13 im Nahfeld 23 erfolgen und in einem Schritt S12 kann ausgesendet werden, dass die Synchronisation bzw. die Auswahl der Lücke 13 abgeschlossen ist, sobald die Kosten für eine Trajektorie T1, T2 für einen möglichen Spurwechselmanöver die Kosten der Trajektorie T3, bei welcher das Fahrzeug 1 auf dem zweiten Fahrstreifen 18 bleibt, überschreiten.

Falls die jeweiligen Kosten der Trajektorien T1, T2 für die möglichen Spurwechselmanöver über dem Schwellwert liegen, wird in einem Schritt S12 ein Bereich 30 des Mittelfelds 24 untersucht, welcher sich in Fahrtrichtung hinter dem Fahrzeug 1 befindet. Zu diesem Zweck kann auch die Geschwindigkeit des Fahrzeugs 1 reduziert werden. In einem Schritt S13 kann dann fortlaufend eine Wahrscheinlichkeit für einen erfolgreichen Spurwechsel bestimmt werden. Falls diese Wahrscheinlichkeit einen Schwellwert überschreitet, kann beispielsweise solange gewartet werden, bis eine geeignete Lücke 12 für ein Spurwechselmanöver im Nahfeld 23 vorhanden ist. Falls die Wahrscheinlichkeit den Schwellwert aber unterschreitet, kann die Geschwindigkeit des Fahrzeugs 1 weiter reduziert werden. Es kann auch ein Bereich 31 des Fernfelds 24 untersucht werden, welcher in Fahrtrichtung hinter dem Fahrzeug 1 liegt.

## Patentansprüche

1. Verfahren zum Unterstützen eines Nutzers eines Fahrzeugs (1) bei einem Spurwechselmanöver, umfassend die Schritte:
- Empfangen eines Navigationsbefehls zum Durchführen des Spurwechselmanövers von einem zweiten Fahrstreifen (18) auf einen ersten Fahrstreifen (17) einer Straße (22),
- Suchen von Lücken (12) für das Fahrzeug (1) zwischen weiteren Verkehrsteilnehmern (13) auf dem ersten Fahrstreifen (17) und
- Auswählen einer der Lücken (12) für das Spurwechselmanöver,
- Definieren eines Fernfelds (25), eines Mittelfelds (24) und eines Nahfelds (23) in einer Umgebung (5) des Fahrzeugs (1), wobei das Nahfeld (23) an das Fahrzeug (1) angrenzt, das Mittelfeld (24) sich an das Nahfeld (23) anschließt und das Fernfeld (25) sich an das Mittelfeld (24) anschließt,
- wobei das Nahfeld (23) und das Mittelfeld (24) innerhalb eines Erfassungsbereichs von Umfeldsensoren (4) des Fahrzeugs (1) liegen, und
- Durchführen der Suche und/oder der Auswahl der Lücke (12) nach einer vorbestimmten Reihenfolge,
**dadurch gekennzeichnet, dass** das Fernfeld (25) außerhalb des Erfassungsbereichs der Umfeldsensoren (4) liegt und dass gemäß der vorbestimmten Reihenfolge zunächst ein Bereich (29) des Fernfelds (25), welcher in Fahrtrichtung vor dem Fahrzeug (1) liegt, danach ein Bereich (28) des Mittelfelds (24), welcher in Fahrtrichtung vor dem Fahrzeug (1) liegt, und anschließend das Nahfeld (23) überprüft werden.

2. Verfahren nach Anspruch 1,
**dadurch gekennzeichnet, dass**
bei der Überprüfung des Bereichs (29) des Fernfelds (25) für den ersten Fahrstreifen (17) eine Verkehrsdichte und/oder eine mittlere Größe der Lücken (12) zwischen den Verkehrsteilnehmern (13) prädiziert wird.

3. Verfahren nach Anspruch 1 oder 2,
**dadurch gekennzeichnet, dass**
bei der Überprüfung des Bereichs (28) des Mittelfelds (24) die Lücken (12) zwischen den Verkehrsteilnehmern (13) anhand von Sensordaten, welche mit den Umfeldsensoren (4) bereitgestellt werden, erkannt werden.

4. Verfahren nach einem der vorhergehenden Ansprüche,
**dadurch gekennzeichnet, dass**
für die Überprüfung des Nahfelds (23) eine Mehrzahl von Trajektorien (T1, T2) für mögliche Spurwechselmanöver in die Lücken (12) zwischen den Verkehrsteilnehmern (13) auf dem ersten Fahrstreifen (17) bestimmt wird.

5. Verfahren nach Anspruch 4,
**dadurch gekennzeichnet, dass**
die Mehrzahl Trajektorien (T1, T2) für die möglichen Spurwechselmanöver und eine Trajektorie (T3), welche eine Weiterfahrt des Fahrzeugs (1) auf dem zweiten Fahrstreifen (18) beschreibt, auf Grundlage einer Kostenfunktion bewertet werden.

6. Verfahren nach einem der vorhergehenden Ansprüche,
**dadurch gekennzeichnet, dass**
gemäß der vorbestimmten Reihenfolge für die Suche und/oder Auswahl der Lücken nach der Überprüfung des Nahfelds (23) ein Bereich (30) des Mittelfelds (24), welcher in Fahrtrichtung hinter dem Fahrzeug (1) liegt, und/oder ein Bereich (31) des Fernfelds (25), welcher in Fahrtrichtung hinter dem Fahrzeug (1) liegt, untersucht werden.

7. Verfahren nach einem der vorhergehenden Ansprüche,
**dadurch gekennzeichnet, dass**
bei der Suche und/oder Auswahl der Lücken in den Bereichen (28, 29, 30, 31) jeweils Wahrscheinlichkeiten für ein erfolgreiches Spurwechselmanöver bestimmen werden und falls die jeweilige Wahrscheinlichkeit einen Grenzwert unterschreitet, in den nächsten Bereich (28, 29, 30, 31) gemäß der vorbestimmten Reihenfolge gewechselt wird.

8. Verfahren nach einem der vorhergehenden Ansprüche,
**dadurch gekennzeichnet, dass**
das Spurwechselmanöver derart geplant wird, dass das Fahrzeug (1) von dem ersten Fahrstreifen (17) auf eine Ausfahrt (21) der Straße (22) manövriert wird.

9. Verfahren nach Anspruch 8,
**dadurch gekennzeichnet, dass**
bis zu einem Erreichen der Ausfahrt für eine Geschwindigkeit (v) des Fahrzeugs (1) ein überschreitbarer Geschwindigkeitsverlauf und/oder eine nicht überschreitbare Grenzgeschwindigkeit vorgegeben werden.

10. Fahrerassistenzsystem (2) für ein Fahrzeug (1), wobei das Fahrerassistenzsystem (2) zum Durchführen eines Verfahrens nach einem der vorhergehenden Ansprüche eingerichtet ist.

## Claims

1. Method for assisting a user of a vehicle (1) during a lane change manoeuvre, comprising the steps of:
- receiving a navigation command to carry out the lane change manoeuvre from a second lane (18) to a first lane (17) of a road (22),
- searching for gaps (12) for the vehicle (1) between further road users (13) in the first lane (17), and
- selecting one of the gaps (12) for the lane change manoeuvre,
- defining a far field (25), a mid field (24) and a near field (23) in the surroundings (5) of the vehicle (1), wherein the near field (23) adjoins the vehicle (1), the mid field (24) adjoins the near field (23) and the far field (25) adjoins the mid field (24),
- wherein the near field (23) and the mid field (24) are within a capture range of environmental sensors (4) of the vehicle (1), and
- searching for and/or selecting the gap (12) according to a predetermined order, **characterized in that** the far field (25) is outside the capture range of the environmental sensors (4), and **in that**, in accordance with the predetermined order, first an area (29) of the far field (25) that is in front of the vehicle (1) in the direction of travel, then an area (28) of the mid field (24) that is in front of the vehicle (1) in the direction of travel and then the near field (23) are checked.

2. Method according to Claim 1,
**characterized in that**
a traffic density and/or an average size of the gaps (12) between the road users (13) is/are predicted when checking the area (29) of the far field (25) for the first lane (17).

3. Method according to Claim 1 or 2,
**characterized in that**
the gaps (12) between the road users (13) are detected on the basis of sensor data, which are provided by the environmental sensors (4), when checking the area (28) of the mid field (24).

4. Method according to one of the preceding claims,
**characterized in that**
a plurality of trajectories (T1, T2) for possible lane change manoeuvres into the gaps (12) between the road users (13) in the first lane (17) are determined for checking the near field (23).

5. Method according to Claim 4,
**characterized in that**
the plurality of trajectories (T1, T2) for the possible lane change manoeuvres and a trajectory (T3) that describes an onward journey of the vehicle (1) in the second lane (18) are assessed on the basis of a cost function.

6. Method according to one of the preceding claims,
**characterized in that**
in accordance with the predetermined order for searching for and/or selecting the gaps, after the near field (23) has been checked, an area (30) of the mid field (24) that is behind the vehicle (1) in the direction of travel and/or an area (31) of the far field (25) that is behind the vehicle (1) in the direction of travel is/are examined.

7. Method according to one of the preceding claims,
**characterized in that**
probabilities of a successful lane change manoeuvre are respectively determined when searching for and/or selecting the gaps in the areas (28, 29, 30, 31) and, if the respective probability falls below a limit value, there is a changeover to the next area (28, 29, 30, 31) in accordance with the predetermined order.

8. Method according to one of the preceding claims,
**characterized in that**
the lane change manoeuvre is planned such that the vehicle (1) is manoeuvred from the first lane (17) to an exit ramp (21) of the road (22).

9. Method according to Claim 8,
**characterized in that**
a speed profile that can be exceeded and/or a speed limit that cannot be exceeded is/are predefined for a speed (v) of the vehicle (1) until the exit ramp is reached.

10. Driver assistance system (2) for a vehicle (1), wherein the driver assistance system (2) is set up to carry out a method according to one of the preceding claims.

## Revendications

1. Procédé pour assister un utilisateur d'un véhicule (1) lors d'une manœuvre de changement de voie, comprenant les étapes suivantes :
- réception d'une instruction de navigation pour effectuer la manœuvre de changement de voie d'une deuxième voie de circulation (18) vers une première voie de circulation (17) d'une route (22),
- recherche d'intervalles (12) pour le véhicule (1) entre d'autres usagers de la route (13) sur la première voie de circulation (17) et
- sélection de l'un des intervalles (12) pour la manœuvre de changement de voie,
- définition d'un champ lointain (25), d'un champ intermédiaire (24) et d'un champ proche (23) dans un environnement (5) du véhicule (1), le champ proche (23) étant adjacent au véhicule (1), le champ intermédiaire (24) se rattachant au champ proche (23) et le champ lointain (25) se rattachant au champ intermédiaire (24),
- le champ proche (23) et le champ intermédiaire (24) se trouvant à l'intérieur d'une zone de détection de capteurs d'environnement (4) du véhicule (1), et
- réalisation de la recherche et/ou de la sélection de l'intervalle (12) selon un ordre prédéterminé, **caractérisé en ce que** le champ lointain (25) se trouve en dehors de la zone de détection des capteurs d'environnement (4) et **en ce que**, conformément à l'ordre prédéterminé, une zone (29) du champ lointain (25), laquelle est située devant le véhicule (1) dans le sens de la marche, est tout d'abord vérifiée, ensuite une zone (28) du champ intermédiaire (24), laquelle se trouve devant le véhicule (1) dans le sens de la marche, et ensuite le champ proche (23).

2. Procédé selon la revendication 1,
**caractérisé en ce que**
lors de la vérification de la zone (29) du champ lointain (25) pour la première voie de circulation (17), une densité de trafic et/ou une taille moyenne des intervalles (12) entre les usagers de la route (13) sont prédites.

3. Procédé selon la revendication 1 ou 2,
**caractérisé en ce que**
lors de la vérification de la zone (28) du champ intermédiaire (24), les intervalles (12) entre les usagers de la route (13) sont reconnus à l'aide des données de capteurs qui sont fournies par les capteurs d'environnement (4).

4. Procédé selon l'une des revendications précédentes, **caractérisé en ce que**
pour la vérification du champ proche (23), une pluralité de trajectoires (T1, T2) sont déterminées pour des manœuvres de changement de voie possibles dans les intervalles (12) entre les usagers de la route (13) sur la première voie de circulation (17).

5. Procédé selon la revendication 4,
**caractérisé en ce que**
la pluralité de trajectoires (T1, T2) pour les manœuvres de changement de voie possibles et une trajectoire (T3) qui décrit la poursuite du trajet du véhicule (1) sur la deuxième voie de circulation (18) sont évaluées sur la base d'une fonction de coût.

6. Procédé selon l'une des revendications précédentes, **caractérisé en ce que**
conformément à l'ordre prédéterminé pour la recherche et/ou la sélection des intervalles après la vérification du champ proche (23), une zone (30) du champ intermédiaire (24), laquelle se trouve derrière le véhicule (1) dans le sens de la marche, et/ou une zone (31) du champ lointain (25), laquelle se trouve derrière le véhicule (1) dans le sens de la marche, sont examinées.

7. Procédé selon l'une des revendications précédentes, **caractérisé en ce que**
lors de la recherche et/ou de la sélection des intervalles dans les zones (28, 29, 30, 31), des probabilités de réussite d'une manœuvre de changement de voie sont respectivement déterminées et, dans le cas où la probabilité respective devient inférieure à une valeur limite, un passage est effectué à la zone suivante (28, 29, 30, 31) selon l'ordre prédéterminé.

8. Procédé selon l'une des revendications précédentes, **caractérisé en ce que**
la manœuvre de changement de voie est planifiée de telle sorte que le véhicule (1) est manœuvré de la première voie de circulation (17) à une sortie (21) de la route (22).

9. Procédé selon la revendication 8,
**caractérisé en ce que**
jusqu'à ce que la sortie soit atteinte, une courbe de vitesse pouvant être dépassée et/ou une vitesse limite ne pouvant pas être dépassée sont prédéfinies pour une vitesse (v) du véhicule (1).

10. Système d'aide à la conduite (2) pour un véhicule (1), le système d'aide à la conduite (2) étant conçu pour mettre en œuvre un procédé selon l'une des revendications précédentes.
